# EUROPEAN PATENT SPECIFICATION

(11) **EP 1 514 405 B1**
(45) Date of publication and mention of the grant of the patent: **25.06.2008**
(21) Application number: 03722960.6
(22) Date of filing: 15.05.2003
(51) Int. Cl.: H04B 1/00, H04B 1/10

(54) **DIGITAL VIDEO BROADCAST-TERRESTRIAL (DVB-T) RECEIVER INTEROPERABLE WITH A GSM TRANSMITTER IN A NON-INTERFERING MANNER USING CLASSMARK CHANGE PROCEDURE**
EMPFÄNGER FÜR DVB-T (DIGITAL VIDEO BROADCAST-TERRESTRIAL) MIT DER FÄHIGKEIT ZUR ZUSAMMENARBEIT MIT EINEM GSM-SENDER AUF NICHTSTÖRENDE WEISE UNTER VERWENDUNG EINER CLASSMARK-ÄNDERUNGSPROZEDUR
RECEPTEUR DVB TERRESTRE INTEROPERABLE AVEC UN EMETTEUR GSM, SANS INTERFERENCE, UTILISANT UNE PROCEDURE DE CHANGEMENT D'INDICATEUR DE CLASSE DE SERVICE

(30) Priority: 05.06.2002 US 164176
(43) Date of publication of application: 16.03.2005
(73) Proprietor: Nokia Corporation, 02150 Espoo (FI)
(72) Inventor: MAALISMAA, Juha, FIN-90450 Kempele (FI); LEINONEN, Marko, FIN-90520 Oulu (FI)
(74) Representative: Derry, Paul Stefan
(86) International application number: PCT/IB2003/001999
(87) International publication number: WO 2003/105458

(56) References cited:
- WO-A-01/89102
- US-A- 6 167 039
- US-A1- 2002 010 763
- US-A1- 2002 146 995
- US-A1- 2003 098 806
- HAMACHER C.: 'Required guard bands for co-operation of DVB-T and UMTS' PERSONAL, INDOOR AND MOBILE RADIO COMMUNICATIONS vol. 4, 15 September 2002, PISCATAWAY, NJ, USA, IEEE, pages 1550 - 1554, XP010611526

## Description

### TECHNICAL FIELD:

These teachings relate generally to methods and apparatus for limiting radio frequency interference from a primary system with the operation of a secondary system, where the primary system is located in proximity to the secondary system. More specifically, the teachings herein relate to limiting interference caused in a hybrid system by operation of a cellular transmitter in proximity with at least one of a DVB-T and a GPS receiver.

### BACKGROUND:

The expansion of wireless communications technologies has provided individuals with an ever increasing list of available services. Some of these services are both popular and a compliment to existing systems. Therefore, there is a demand for integration of various services with cellular systems, in a form that provides reliable performance. Examples of components for integration with a cellular transmitter include Digital Video Broadcast-Terrestrial (DVB-T) receivers and Global Positioning System (GPS) receivers.

DVB-T was first adopted as a standard in 1997, and is currently rapidly expanding in Europe, Australia and Asia. DVB-T offers about 24 Mb/s data transfer capability to a fixed receiver, and about 12 Mb/s to a mobile receiver using an omnidirectional antenna. Some distinguishing technical features of DVB-T include the following: DVB-T offers a net bit rate (R) per frequency channel in the range of about 4.98 to 31.67 Mbit/s and operates with a channel separation of 8 MHz in the UHF range of 470-862 MHz (in the VHF 174-216 MHz range the channel separation is 7 MHz). Single frequency networks can be used. DVB-T uses a Coded Orthogonal Frequency Division Multiplex (COFDM) multi-carrier technique with QAM, 16QAM or 64QAM carrier modulation. The number of sub-carriers can be between 1705 (2k) to 6817 (8k). Inner forward error correction coding (FEC) uses convolutional coding with rates 1/2, 2/3, 3/4, 5/6 or 7/8, while an outer coding scheme uses Reed-Solomon (204,188,t-8) coding. Outer bit-interleaving uses convolutional interleaving of depth 0.6-3.5 msec.

While DVB-T was developed for MPEG-2 Transport stream distribution, it is capable of carrying other types of (non-video) data. For example, DVB-T can provide a broadband, mobile wireless data transport for video, audio, data and Internet Protocol (IP) data. DVB-T is scalable, with cells sizes ranging from, for example,100km down to picocells (e.g. tens to hundreds of meters). The capacity is very large, e.g, 54 channels can be supported, each running at 5-32Mbit/s. One TS-packet is 188 (204) bytes long.

Due to the large number of sub-carriers the symbol time can be made very long. For example, for the 8k sub-carrier case the symbol time is on the order of 1 millisecond. A guard interval is inserted before each symbol.

Thus, it can be realized that while well suited for providing digital video streams, DVB-T can be used to provide high speed data streams for other types of applications, such as interactive services, Internet access, gaming and e-commerce services. As can be appreciated, for interactive and other services to be provided, a return link or channel is required from the user back to some server or other controller. One example of such as a system is known as MediaScreen^{™} that was shown by the assignee of this patent application. This device provides a LCD display screen for displaying information received from a DVB-T downlink, and includes a GSM function having a transmitter to provide the return link or channel.

The Global Positioning System (GPS) also provides useful services to cellular phone users. GPS, developed by the U.S. Department of Defense, provides extremely accurate positioning information. The GPS system relies upon radio transmissions from an array of GPS satellites. The signal from the satellites is received by a GPS receiver, which determines positioning information. At present, all GPS satellites use the same two carrier frequencies, Ll(1575.42 MHz), and L2 (1227.60 MHz).

GPS signaling is based on a Code Division Multiple Access (CDMA) principle, which means that the satellites and their signals are only separated by the code used to modulate the carrier signal. Code bits are called chips to distinguish them from data bits. The carrier modulation used is bi-phase shift key (BPSK) modulation, in which the carrier frequency phase is shifted 180 degrees every time a chip changes from zero to one or vice-versa.

The C/A-code (Coarse/Acquisition code) is a 1023-chip long bit PN (pseudorandom noise) sequence, which is unique for each satellite. It is repeated every millisecond. Therefore, the chip rate of the C/A-code is 1.023 MHz. The P-code (Precision code) is much longer, with a chip rate of 10.23 MHz which repeats every seven days. The P-code may also be referred to as P (Y)-code. Both the C/A-code and the P (Y)-code are transmitted on the carrier frequency L1. Presently, L2 carries only the P (Y)-code, which has been reserved for military users. L2 is not available to civilian users.

In the future, civilian use of L2 will be available, as will the use, of a third frequency, L5, which will operate at 1176.45 MHz. The new civilian signal at L2, referred to as "L2CS", will generally be characterized by a 1.023 Mcps effective ranging code having a Time Division Multiplex of two ½ rate codes. Coarse/Acquisition codes will be based on the L5 code structure, with a CL code of 767,250 chips and a CM code of 10,230 chips. L2CS will be BPSK modulated onto the L2 carrier, along with the P(Y) code. The L5 signal will provide a 10.23 Mcps ranging code, wherein it is expected that improved cross correlation properties will be realized. The L5 signal will be message based. Included will be an I channel carrying 10-symbol Neumann/Hoffman encoding; and a Q channel carrying 20-symbol Neumann/Hoffman encoding. The I and Q channels will be orthogonally modulated onto the L5 carrier.

Interference is known to present a challenge to the use of GPS, due to the low power of GPS signals. Despite this, GPS is increasingly being depended upon as the principal navigational aid. However, it has also been recognized that efforts should be taken to mitigate the effects of intentional interference, unintentional interference, and atmospheric disturbances on GPS and its augmentation systems. The mitigation of interference is not only important to aviation, but to other GPS applications as well. Successful operation ofL5 is a critical part of ongoing efforts to overcome these effects.

It is considered that all three civil signals (L1 - C/A, L2 C/A, and L5) will enable robust applications of GPS information, including precision navigation operations. Further, the additional signals will provide for increased availability of GPS information, as well as enhancement to the integrity of GPS signals. However, as GPS applications continue to grow in popularity and diversity, application developers must remain diligent in their efforts to limit the effect of interference, including radio-interference.

Operation of DVB-T receivers or GPS receivers in conjunction with a cellular transmitter maybe problematic. For example, a problem that may be created by the transmission of the DVB-T signal is interference into the UMTS receive band (beginning at about 826 MHz). This problem was recognized and discussed by C. Hamacher "Spectral Coexistence of DVB-T and UMTS in a Hybrid Radio System", ComNets. The use of a guard band (GB) is discussed in Fig. 1 of this patent application, and is based on Fig. 1 appearing in Hamacher. Fig. 1 shows an adjacent channel interference (ACI) scenario, with transmitter masks defined by the relevant DVB-T and UMTS standards, and the receiver filters assumed to be ideal. In Section VI of Hamacher, (Conclusions and Future Work) the author states that comparable studies with DVB as a victim system would be performed.

In WO 01/39576, "Charging in Telecommunication System Offering Broadcast Services", published 7 June 2001, Risto Mäkipää and Jorma Havia (Alma Media Oyj) describe a system having a terminal and a broadcast network offering broadcast services. The terminal selects the information to be broadcast by means of a reverse connection made through, for example, a third generation mobile system, embodied as a Universal Mobile Telecommunications System (UMTS) network.

In an article entitled "Evaluation of Packet-by-Packet Downlink Radio Resource Management Schemes", in VTC'01, Rhodes, Greece, June 6-9, 2001, and in an article entitled "Dynamic Single FrequencyNetworks", IEEE Journal on Selected Areas in Communications, Vol. 19, No. 10, October 2001, pgs.1905-1914, Magnus Eriksson discusses asymmetric Internet access using a DVB-T downlink with a cellular system, i.e., GSM, as the narrowband uplink. These articles discuss the use of dynamic radio resource management (RRM) techniques, such as dynamic channel allocation (DCA), link adaptation and traffic adaptive handover to improve spectral efficiency.

The inventors have realized that a potential exists for unacceptable interferences in a hybrid system having a GSM transmitter and a system for another radiofrequency distributed service, when the GSM transmitter is operational. For example, in a DVB-T receiver when an associated return channel cellular system (e.g., GSM) transmitter is operational, especially in the case where there is only a small physical separation between the two antennas (i.e., the two antennas are operating in the near field, and antenna radiation pattern filtering cannot be employed in the receiver filtering arrangement.)

Furthermore, this problem is not limited to interference arising from the use of GSM for the return channel, but can occur as well should a GSM voice call or a data call be made when DVB-T reception is ongoing. For example, the user might perform a digital packet access via a GSM/EDGE network to an e-mail server or a similar packet protocol system. Furthermore, a WAP communication can be made during DVB-T reception to view a schedule of television programming that is available from a WAP/WEB server. Similarly, GPS reception may be impeded by GSM transmission.

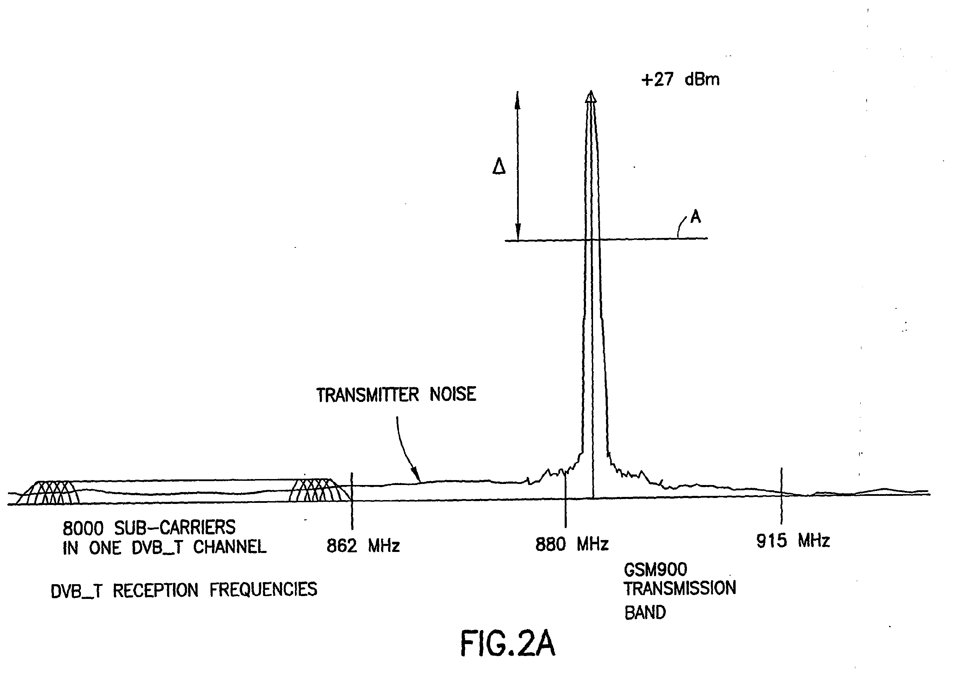

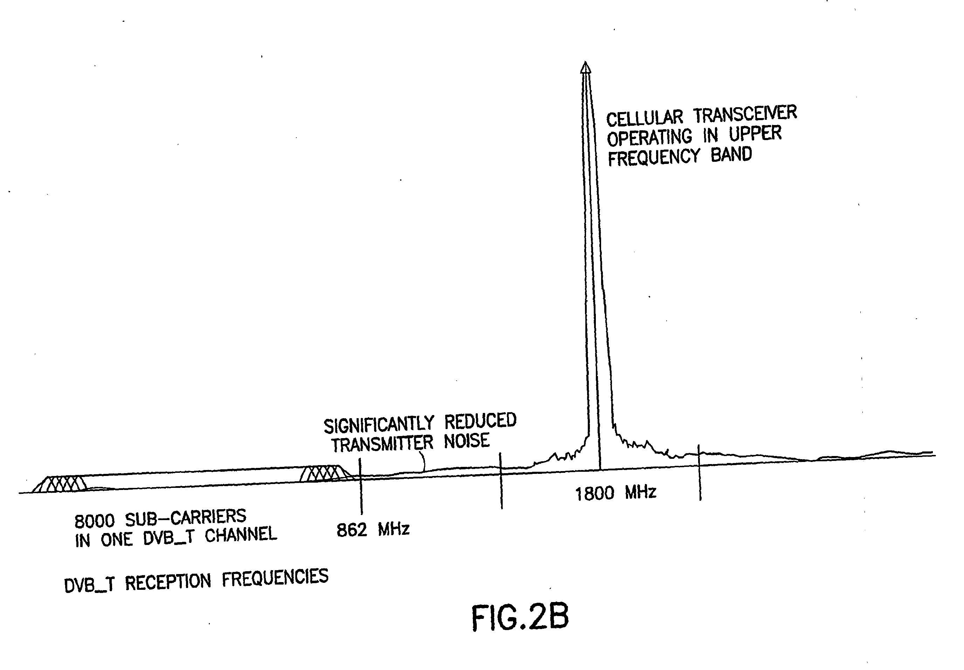

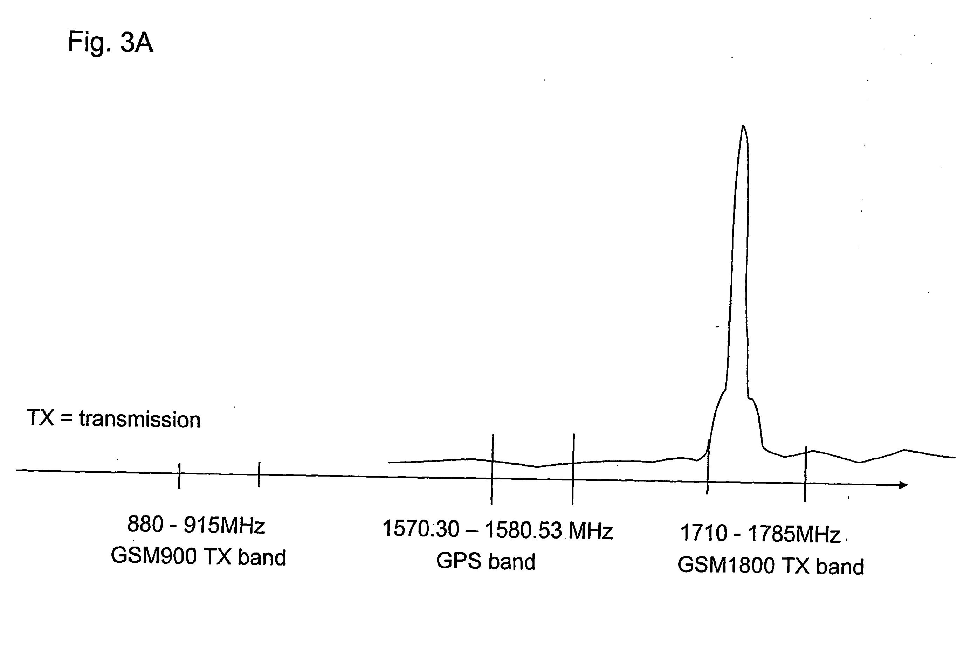

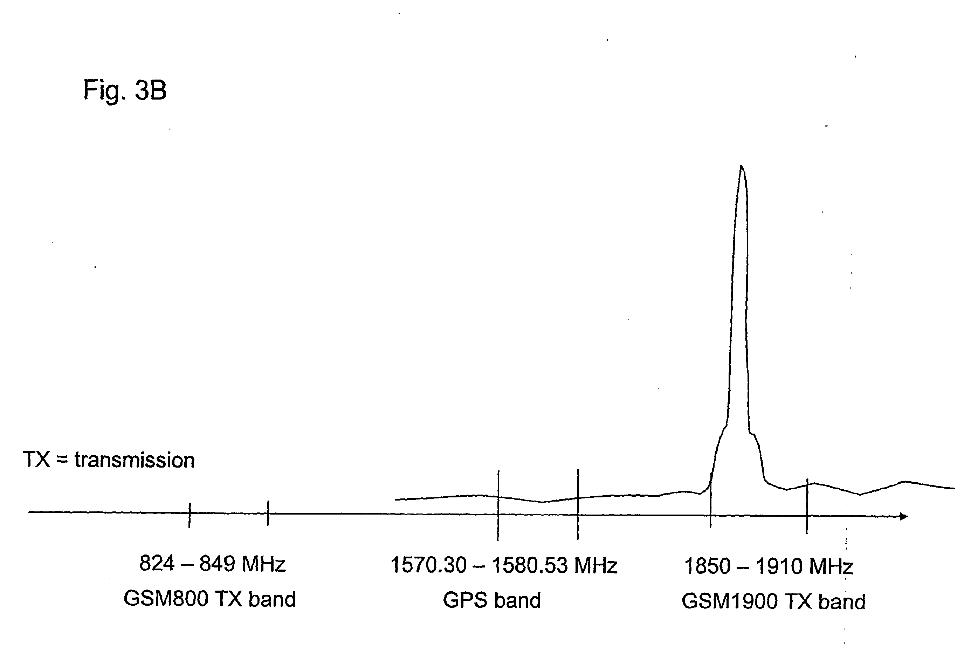

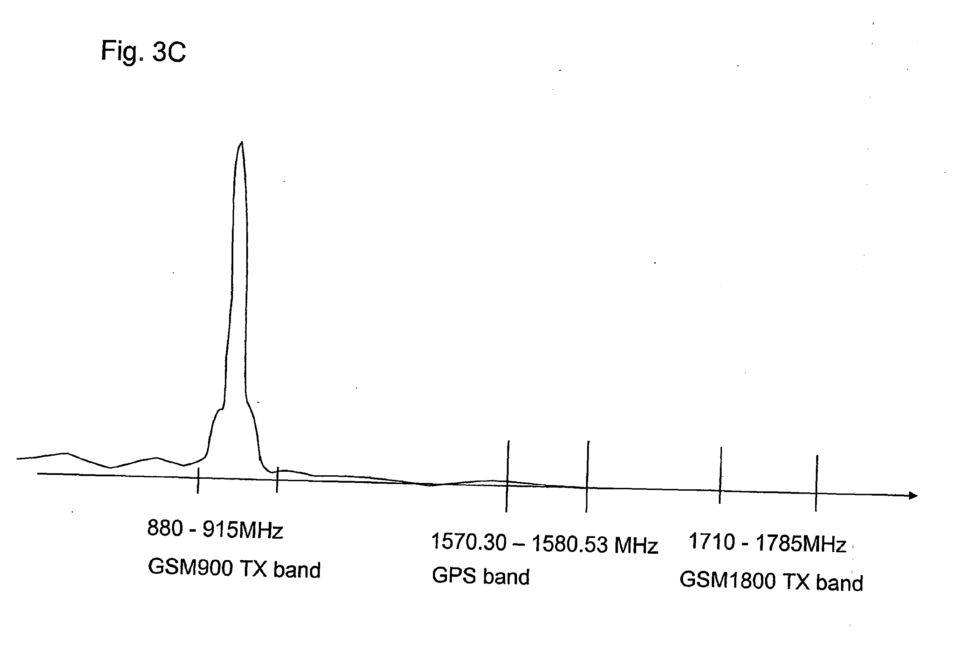

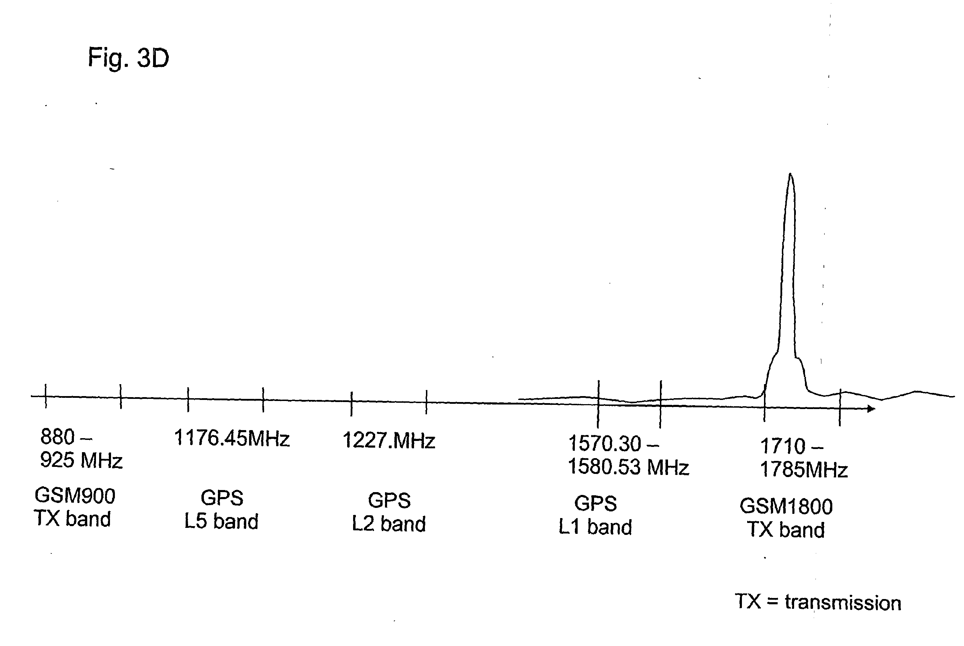

Such problems arise due to the close relation of frequencies between the GSM transmission band, and the operating frequency band of the RF distributed service. For example, in the case of DVB-T, the problem arises because the lower end of the GSM transmission band begins at 880 MHz. In the case of DVB-T, the upper end of the received DVB-T frequency band ends at 862 MHz. Thus, transmitted energy from the GSM band can leak into the DVB-T receiver, resulting in errors in the received data. This is shown graphically in Figs. 2A and 2B. The point labeled as A designates the GSM 900 MHz -23dBm receiver blocking level used for an in-band blocking measurement. The spurious in-band blocking specification to one tone is -23dBm at 3MHz, and - 31 dBm at 6MHz. If one assumes that the GSM900 average transmitted power is +33dBm, with reference to Fig. 3, and assumes a reasonable 6dB of antenna isolation from the GSM antenna 20 to the DVB-T antenna 12 (an exact figure is difficult to discern, as the antennas are assumed to be in the near field, and antenna pattern filtering is not usable), then the power seen at the input to the DVB-T receiver 14 is +27dBm, which is more than 30dB greater in spurious signal level than in the GSM receiver 22. In Fig. 2 the delta (A) indicates the more strenuous (50 DB) difference in the required DVB-T blocking requirement. The DVB-T receiver sees significant GSM transmitter noise in the 8k sub-carrier band at the upper (862 MHz) end of the DVB-T spectrum. This is an undesirable situation, as errors can be experienced in the DVB-T reception when the GSM transmitter is active.

While at first glance it may seem that one could simply implement a highly linear DVB-T receiver, in practice this is difficult to achieve in a cost effective and a low power consumption manner, both of which are important considerations when building portable, battery powered consumer devices. If the GSM transmission from the lowest GSM transmit channel were to be adequately filtered from the DVB-T receiver when operating at the highest channel, a very steep filter would be required. The steepness of the required filter implies that the insertion loss at the passband of the DVB-T receiver is increased, and thus the sensitivity of the receiver would be reduced.

It should be noted that while the foregoing discussion has concentrated on specific DVB-T frequencies and the European GSM system, the same problems can arise with other RF distributed services. For example, both European GSM and U.S. GSM can produce appreciable transmitter noise in the frequency band about the GPS L1 frequency, of between about 1570.30 MHz to about 1580.53 MHz. As another example, in the United States of America digital television is referred to as ATSC (Advanced Television Systems Committee). The U.S. FCC has allocated the frequency bands of 764-776MHz and 794-806MHZ for Digital Television (DTV) broadcasts. One U.S. cellular transmission band (already occupied) has been established from 824-849MHz. As can be noted, the upper boundary of the DTV band (806MHz) is separated from the lower end of the cellular transmit band by only 18MHz, about the same separation that is seen in the DVB-T/GSM embodiment described above.

WO 01 /89102 discloses a dual-radio communication apparatus which has a Bluetooth radio for use in a first frequency band and a Globalstar satellite radio for use in a second frequency band, which is proximate to the first frequency band. During times when the Globalstar satellite radio is not in operation, the Bluetooth radio will be maintained in a first operating mode in the entire Bluetooth frequency range. When the Globalstar radio is in operation, a limited part of the Bluetooth frequency range, namely a part which provides maximum spectral separation from the second frequency band, is used. Consequently, sufficient guardspace is provided in order to suppress any spurious effects caused by the Bluetooth transmitter to an acceptable level. Regardless of whether or not the Globalstar satellite radio is in operation when a Bluetooth link is established, negotiations will immediately take place in order to set the Bluetooth link in its second operating mode, using only the limited Bluetooth frequency range. As soon as the Globalstar satellite radio stops operating, the Bluetooth link will be reset to its first operating mode, using again the entire Bluetooth frequency range.

### SUMMARY OF THE PREFERRED EMBODIMENTS

The foregoing and other problems are overcome, and other advantages are realized, in accordance with the presently preferred embodiments of these teachings.

Disclosed herein is a device, and methods for operation thereof, which provides a user with a cellular mobile terminal (CMT) and at least one further radio frequency (RF) distributed service. The at least one further RF distributed service may be interactive, or generally provide an ongoing data signal. Exemplary RF distributed services disclosed herein include, and are not limited to: DVB-T transmissions, which may, or may not, have an interactive component, and GPS signal reception.

The device has a first antenna and a second antenna, a receiver that is coupled to the first antenna and a transmitter that is coupled to the second antenna. The method includes, prior to receiving information with the receiver in a first band of radio frequencies, generating a notification of reception with the receiver by asserting a receiver on signal and, in response to the notification, requesting a change of transmitter transmission frequencies from a second band of radio frequencies to a third band of radio frequencies that is predetermined to avoid interference with the reception of the information in the first band of radio frequencies. The transmitter is preferably a cellular mobile terminal transmitter, and the request for a change can be made by initiating a Classmark Change procedure with a cellular mobile terminal wireless network. In a first preferred embodiment the first band of radio frequencies comprises a DVB-T 470-862MHz reception band, the second band of radio frequencies comprises a GSM 880-915MHz transmission band, and the third band of radio frequencies comprises a higher GSM band, such as the GSM1800MHz band or the European third generation (3G) band (UMTS, WCDMA) 1920-1980, 2110-2170 MHz band. In other embodiments, such as one practiced in the United States, the CMT call may be rerouted from the CMT 800MHz band to the CMT 1900MHz band.

In a second preferred embodiment, the first band of radio frequencies comprises a band of frequencies associated with operation of a GPS receiver. That is, the first band of frequencies may include one or more of a band of frequencies centered about 1176.45 MHz, 1227.60 MHz, or 1575.42 MHz. In this second embodiment, communication transmissions on a second band of frequencies are switched to a third band of frequencies in the foregoing manner, where transmission on a third band is expected to provide less interference with signal reception in the first band, than would continuing transmission in the second band.

### BRIEF DESCRIPTION OF THE DRAWINGS

The foregoing and other aspects of these teachings are made more evident in the following Detailed Description of the Preferred Embodiments, when read in conjunction with the attached Drawing Figures, wherein:
Fig. 1 is a graph taken from the prior art that shows an adjacent channel interference (ACI) scenario with interference from the DVB-T transmission band into the UMTS receive band;
Fig. 2A is a graph that is useful in understanding the problem that is solved by this invention, where co-located GSM and DVB-T antennas result in GSM900 MHz burst energy leaking into the DVB-T receiver;
Fig. 2B is a graph that illustrates the benefit gained by the use of this invention, where the GSM cellular mobile terminal is switched from the GSM900 MHz band to a higher band, such as the GSM1800 MHz band or the 3G WCDMA band, or from the GSM 800MHz band to the GSM 1900MHz band, thereby widely separating the GSM transmitted return channel frequency from the DVB-T reception frequency and substantially reducing interference into the received DVB-T symbol stream;
Fig. 3A is a graph that depicts noise in the GPS band arising from GSM1800 transmission;
Fig. 3B is a graph that depicts reductions in noise in the GPS band resulting from switching a GSM1800 transmission to GSM900;
Fig. 3C is a graph that depicts noise in the GPS band arising from GSM1900 transmission;
Fig. 3D is a graph that depicts GSM900 and GSM1800 bands in relation to GPS L1, L2 and L5 bands;
Fig. 4 is a block diagram of a DVB-T/cellular mobile terminal (CMT) enabled device constructed in accordance with this invention to provide a notification from the DVB-T part to the CMT part of the start of DVB-T reception, enabling the CMT part to request assignment to a different, non-interfering transmission band;
Fig. 5A is a logic flow diagram that illustrates a method in accordance with this invention;
Fig. 5B is a logic flow diagram that illustrates a further method in accordance with this invention; and
Fig. 6 is a waveform diagram that is useful in explaining the adverse effect on the received DVB-T symbol stream by the presence of GSM900 transmitted bursts.

### DETAILED DESCRIPTION OF THE PREFERRED EMBODIMENTS

The device disclosed herein, and the methods for operation thereof, provide for reductions in interference between a cellular transmitter signal, and the receiver signal for an RF distributed service enabled within the device. The device has a first antenna and a second antenna, a receiver that is coupled to the first antenna and a transmitter that is coupled to the second antenna.

As used herein, the term "radiofrequency distributed service" refers to a service that is complimentary to a personal communications channel. That is, the radiofrequency (RF) distributed service provides useful content to the user of a mobile communications device. Typically, such content is produced by a third party, as in the case of DVB-T and GPS data.

Although disclosed herein generally in terms of two embodiments, that of DVB-T and GPS, the teachings herein are not to be limited by these embodiments, or frequencies thereof. That is, it is considered that the problems described herein may arise for other RF distributed services yet to be devised, assigned or reassigned to certain frequencies. Specifically, as a non-limiting example, it is considered that the teachings herein are applicable to limiting interference as may arise in the two additional civilian GPS frequencies of 1227.60 MHz and 1176.45 MHz (having bands of 1222.48 MHz to 1232.72 MHz and 1171.33 MHz to 1181.57 MHz, respectively) soon coming available, while operating a cellular transmitter.

A first embodiment of the invention is now presented, wherein a DVB-T system is used in conjunction with a cellular transmitter.

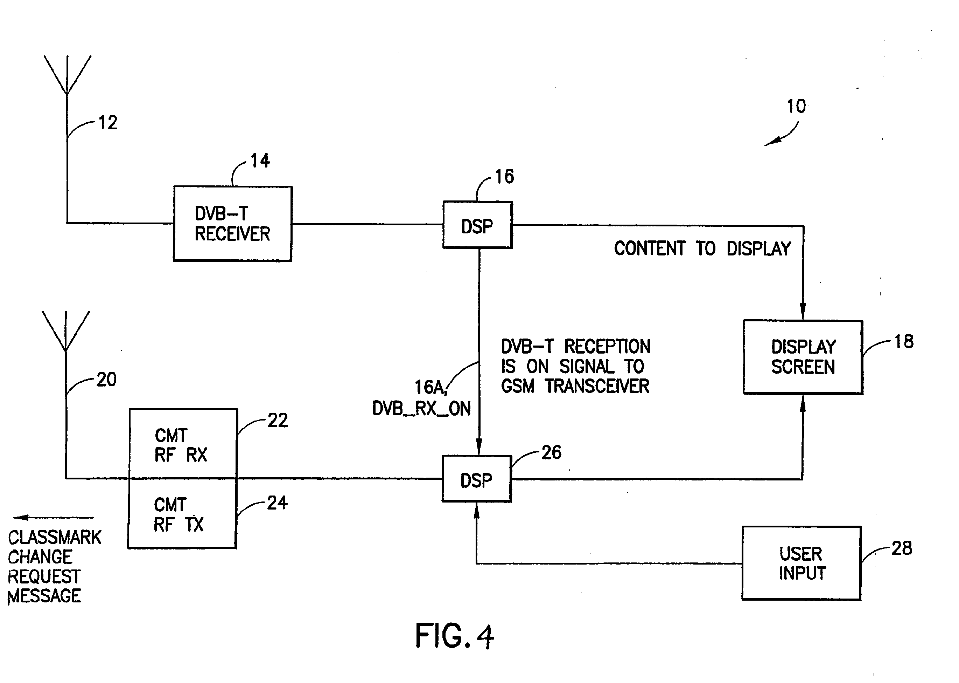

Fig. 4 is a block diagram of an embodiment of a portable device 10 that includes a DVB-T antenna 12, a DVB-T receiver 14, an associated DVB-T signal processor, such as a DVB-T digital signal processor (DSP) 16 and a display 18 for displaying to a user data, such as video or Internet data, that is received from a DVB-T transmitter (not shown). The device 10 also includes a cellular mobile terminal (CMT) that includes a CMT antenna 20, a CMT RF receiver (RX) 22, a CMT RF transmitter (TX) 24 and a CMT DSP 26. The CMT DSP 26 may also be coupled to the display 18 for displaying information received from a remote CMT transmitter (not shown), or a voice communication can be routed to a headset or speaker. In the presently preferred, but non-limiting example, the DVB-T system operates in the UHF range of 470-862 MHz, and the CMT system is a multi-band GSM system capable of operation in at least two frequency bands, most typically the GSM900 MHz band and the GSM1800MHz band (1710-1880MHz). In operation in the U.S. the GSM 800MHz cellular band is 824-849MHz (TX) and 869-894MHz (RX), and the GSM 1900MHz cellular band is 1850-1910MHz (TX) and 1930-1990MHz (RX), while the U.S. digital television (ACTS) highest frequency is 806MHz.

For the illustrated example, when operating as a GSM900 MHz system the lower end of the transmitter spectrum is at 880 MHz (see Fig. 2A), while when operating as a GSM1800 MHz system the lower end of the transmitter spectrum is separated by a significantly larger amount from the upper end of the DVB-T reception band (see Fig. 2B).

Note that the device 10 will typically include some type of user input device 28, such as a keypad, keyboard, mouse, or mouse emulator that provides the interactivity required for the applications of most interest to this invention. For example, if IP data is being delivered through the DVB-T receiver 14,16 to the display screen 18, and a web page is displayed, the user may interact with the web page in a conventional manner by typing in information, or pointing and clicking with a mouse or similar pointing device that comprises the user input 28. This relatively low bandwidth user input data is eventually coupled into the CMT DSP 26 (through suitable user interface I/O circuitry, as is well known) where it is formatted into a data stream that is transmitted in a burst-wise fashion, using the CMT transmitter 24 and the CMT antenna 20, back to some server or other controller that is typically also the source of the DVB-T data stream, or coupled thereto. It is these CMT transmissions, due at least in part to the fact that the CMT antenna 20 is essentially co-located with the DVB-T antenna 12, that result in DVB-T reception errors. Of course, other or unrelated CMT transmissions may equally cause DVB-T reception errors.

Note that a data stream can also be received through CMT receiver 22, such as packet acknowledgment messages and supervisory information. Some of the CMT-received data may also be displayed to the user on the display screen 18.

It should further be noted that circuitry may be provided, such as a microphone and speaker, for enabling normal voice calls to be made using the CMT.

When the GSM900 transmitter 24 is on at full power, the 577 microsecond long GSM burst is transmitted with +33dBm power. If at the same time the DVB-T receiver 14 is attempting to receive (assuming that the antenna 12 is physically close to the antenna 20), then the linearity requirement of the receiver 14 becomes very demanding. If the DVB-T receiver 14 is optimized for this environment, then it will consume excessive power in the normal operational mode when the GSM transmitter 24 is not on and the GSM carrier is not present.

If the GSM900 band were to be filtered out of the DVB-T receiver 14 approximately 50dB of filtering would be required with a 20MHz transition. While this is comparable to what is required in the PCS1900 MHz CDMA or WCDMA band, the operation frequency (about 900 MHz) is only about one half, making the implementation even more difficult. Furthermore, about 4dB of insertion loss is experienced when filtering in the PCS 1900 MHz band, implying that even greater insertion loss would be experienced if it were attempted to filter out the GSM900 MHz band from the DVB-T receiver 14.

In accordance with an aspect of this invention the foregoing problems are solved by providing a signal line (DVB_RX_ON) 16A from the DVB-T DSP 16 to the CMT DSP 26. The signal line DVB_RX_ON 16A, when asserted by the DVB DSP 16, means that a DVB-T symbol stream is about to be received, or is expected to be received (e.g., the user has enabled the DVB-T mode, or the user has turned on the DVB-T receiver 14), and the DVB_RX_ON signal line 16A preferably remains asserted during reception.

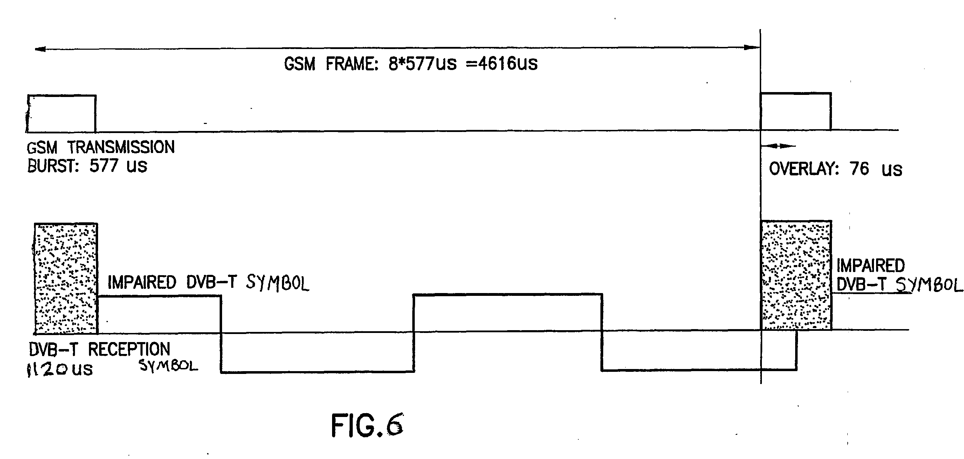

One received DVB-T symbol can have a duration of 1120 microseconds, about twice the duration of the GSM burst, as can be seen in Fig. 6. Note in Fig. 6 that the GSM900 MHz burst overlays the DVB-T reception symbols and, because the GSM900 MHz burst is not synchronized to the DVB-T symbol stream, slides over the DVB-T symbol stream so that no two time-wise adjacent DVB-T symbols are impaired by the same amount.

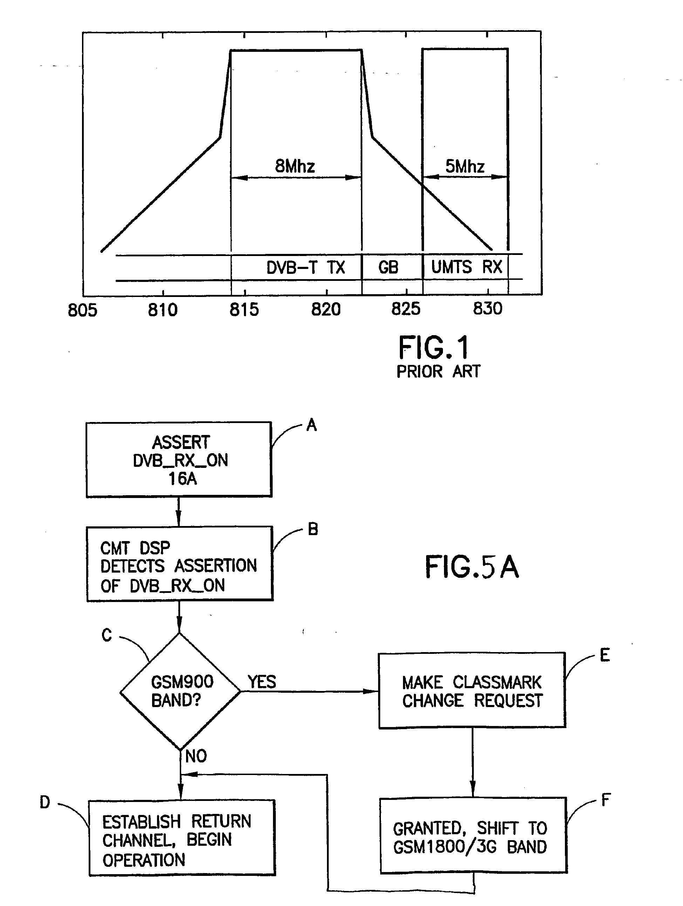

Referring to the logic flow diagram of Fig. 5A, in accordance with this invention the situation of Fig. 6 is avoided by a method that shifts the frequency of the GSM return channel transmissions away from the DVB-T reception band frequencies. However, these teachings are not related solely to return channel transmissions, but apply as well when a CMT call arrives (or is originated) during DVB-T reception, as the CMT transmitter 24 is used for signaling purposes. If the call is answered, then the CMT transmitter 24 will be active for the duration of the call. At Step A, the DVB DSP 16 asserts the DVB_RX_ON signal line 16A to indicate the beginning of DVB-T reception. This can be done in response to the user turning on or otherwise enabling the DVB portion of the device 10. At Step B, the CMT DSP 26 detects the assertion of the DVB_RX_ON signal line 16A, and at Step C makes a determination of whether the CMT is operating in the GSM900 MHz band or in a higher band, such as the GSM1800 MHz or the 3G (e.g., WCDMA) bands. If the CMT is operating in the higher band, then operation continues at Step D to establish, if not already done, the DVB-T return channel to the source of the DVB-T transmission, thereby providing the user with capabilities for interactivity. That is, the return channel transmissions from the CMT transmitter 24 are sufficiently separated in frequency from the upper end of the DVB-T reception band so as to not pose a threat of interference into the DVB-T reception band. However, if at Step C the CMT DSP 26 determines that the CMT is operating in the GSM900 MHz band, then at Step E the DSP 26 formats a message to the CMT network for requesting operation in the higher band. This request can be made by initiating a Classmark Change procedure and by sending a Classmark Change message to the CMT network (see, for example, Section 3.4.10, Classmark Change procedure, 3GPPTS 04.18, V8.11.0 (2001-09)). This procedure enables the CMT to indicate to the wireless network a change of characteristics reflected in the Classmark information element. In this invention the change of characteristics is an indication of a request to move from the GSM900 MHz band to the higher band, either the GSM1800 MHz or the 3G band, depending on network type and availability. Step F assumes that the network responds with permission for the Classmark change, and the CMT DSP 26 makes the change to begin operation in the higher frequency, non-interfering transmission band. Control then passes to Step D to establish the DVB-T return channel to the source of the DVB-T transmission, thereby providing the user with interactivity. The result is operation as reflected in Fig. 2B for the GSM1800 MHz case.

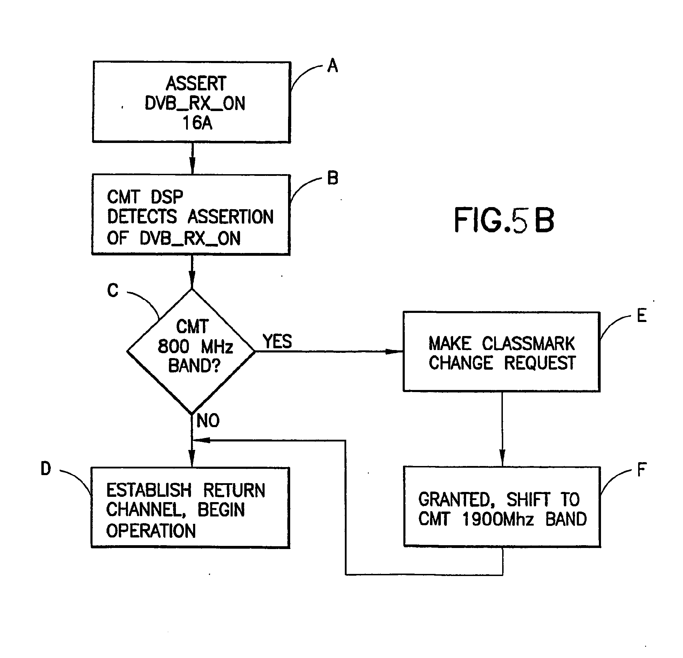

Fig. 5B is a logic flow diagram, similar to Fig. 5A, but for the U.S. CMT case. In Step C, a determination is made if the CMT is operating in the CMT 800 MHz band or in a higher band, such as the CMT 1900 MHz band. If the CMT is operating in the higher band then operation continues at Step D to establish, if not already done, the DVB-T return channel to the source of the DVB-T transmission, thereby providing the user with capability for interactivity. If at Step C the CMT DSP 26 determines that the CMT is operating in the CMT 800 MHz band, then at Step E the DSP 26 formats a message to the CMT network for requesting operation in the higher band. This request can be made by initiating a Classmark Change (or equivalent) procedure and by sending a Classmark Change (or equivalent) message to the CMT network Step F assumes that the network responds with permission for the Classmark Change, and the CMT DSP 26 makes the change to begin operation in the higher frequency, non-interfering CMT 1900 MHz transmission band. Control then passes to Step D to establish the DVB-T return channel to the source of the DVB-T transmission, thereby providing the user with interactivity.

Fig. 2B is a graph that illustrates the benefit gained by the use of this invention, where the GSM CMT transmitter 24 is switched from the GSM900 MHz band to the higher GSM band, such as the GSM1800 MHz band, thereby widely separating the GSM transmitted return channel frequency from the DVB-T reception frequency and substantially reducing interference into the received DVB-T symbol stream.

If the network does not grant the Classmark Change request, the DSP 26 may signal the DVB DSP 16 to simply not receive the DVB-T transmission, thereby avoiding the possibility of receiving corrupted data. The user may be notified of this situation by a message displayed on the display screen 18.

However, if the network does not grant the Classmark Change request it is also within the scope of this invention to operate the device 10 in a manner disclosed in copending and commonly assigned U.S. Patent Application S.N. 10/164,177, filed on June 5, 2002, entitled Digital Video Broadcast-Terrestrial (DVB-T) Receiver Interoperable with a GSM Transmitter in a Non-Interfering Manner, by Marko E. Leinonen and Veijo Korhonen (Attorney Docket Nos.: NC35610, 872.0120.U1(US)), incorporated by reference herein in its entirety. In this case the DVB-T DSP 16 is made aware of the occurrence of each GSM900 MHz burst, by the assertion of a GSM_TX_ON signal line by the DSP 26, and it ignores that part of the received DVB-T symbol that overlaps with the GSM900 MHz burst. A correct symbol determination can still be accomplished, however, since the symbol detection is performed by operating a DVB-T receiver integrator over the input signal form, and then comparing the integration result to a symbol detection threshold value. In many cases, the symbol detection will be accurate if the signal to noise ratio (SNR) is adequate, even though the received DVB-T waveform is not integrated over the entire bit time of 1120 microseconds. During the assertion of the GSM_TX_ON signal line certain unnecessary parts of the DVB receiver can be powered down or placed in a lower power consumption mode, thereby conserving battery power.

Note that it is also possible to simply ignore some or all impaired DVB-T symbols, and rely on the inherent error correction capability to attempt to supply the correct symbol. However, it is not possible to correct all symbols in this manner, and this approach is thus not preferred.

The teachings of this invention enable the request for Classmark Change by the CMT to be made after the start of DVB-T reception occurs, or prior to the start of DVB-T reception. In either case, therefore, there is a step of generating a notification of reception with the DVB-T receiver, i.e., the notification of reception can occur after the actual start of DVB-T reception (after the DVB-T receiver 14 is turned on or otherwise enabled for use) or prior to the actual start of DVB-T reception (before the DVB-T receiver 14 is turned on or otherwise enabled for use).

The cellular transmitter may be operated in a likewise manner for reduction of interference with GPS signals. For example, Fig. 3A depicts the case of European GSM operation with GPS operation. In this embodiment, once a GPS receiver on signal has been received by the CMT DSP, a Classmark Change request is submitted to initiate a shift in operation from the GSM1800 MHz transmission band to the GSM900 MHz band. As a result of the Classmark Change request, a shift to the GSM900 transmission band is granted and an attendant reduction in interference is realized.

Similarly, Fig. 3C depicts the relation of the US GSM1900 transmission band to the L1 GPS band. Fig. 3D depicts the relation of the European GSM900 and GSM1800 transmission bands in relation to GPS L1, L2, and L5 signal bands. Both Fig. 3C and Fig. 3D depict the generation of noise in a GPS signal band arising from a GSM transmission.

In other embodiments, the Classmark Change request may initiate a GSM operation shift from a lower frequency to a higher frequency. For example, in the case where GPS signals are received in the third GPS frequency of 1176.45 designated for implementation in 2005. In this case, in the case of European GSM frequencies, the Classmark Change request would initiate a transfer from the GSM900 MHz transmission band to the GSM1800 MHz transmission band.

The invention has been described thus far in terms of specific examples of frequency bands and the like. However, it should be kept in mind, as was discussed previously, that these teachings can be applied to other frequency bands, such as the non-limiting examples of frequency bands of 764-776MHz and 794-806MHZ that are allocated in the U.S. for DTV broadcasts, and to the cellular 824-849MHz (TX) and 869-894MHz (RX) bands (e.g., the GSM800 MHz band), as well as the cellular 1850-1910MHz (TX) and 1930-1990MHz (RX) bands (e.g., the GSM1900 MHz band), and other designated GPS frequencies (having bands of about 1222.48 MHz to 1232.72 MHz and about 1171.33 MHz to 1181.57 MHz).

Thus, while described above in the context of presently preferred embodiments, it can be appreciated that certain changes in form and details may be made therein, and that the modified method and apparatus will still fall within the teachings of this invention. For example, those skilled in the art should realize that the assertion of a receiver on signal may precede the actual reception of data, in order to give the CMT time to request the Classmark Change from the network. Also, other techniques for shifting the CMT transmitter 24 to the higher frequency band can be used, and further, that the invention is not limited to the use of only the Classmark Change procedure.

Also, while the above disclosure of the presently preferred embodiments has concentrated on the use of the DVB-T and GSM systems, those skilled in the art should realize that these should not be read as limitations on the practice of this invention, and that other types of communications systems using the same or different frequency bands may also benefit from the use of this invention.

Note as well that in some embodiments a single high performance DSP may be used for achieving the functionality of both the DSP 16 and the DSP 26. In this case the receiver on signal may be simply an internal signal or even a flag set in a register or a memory location that software that implements the CMT functionality responds to in the manner described above. In this case one may still refer to two DSPs, but the distinction is then more of a logical than a physical one.

## Claims

1. A method for operating a device (10) comprising a receiver (14, 16) and a transmitter (24), the method comprising generating a notification of reception with the receiver, the reception occurring in a first band of radio frequencies,
**characterised by** in response to the generated notification, determining whether the transmitter (24) is operating in a second band of radio frequencies or in a third band of radio frequencies; and
if it is determined that the transmitter is operating in the second band of radio frequencies, requesting a change of transmitter transmission frequencies from the second band of radio frequencies to the third band of radio frequencies, the third band of frequencies beingpredetermined to reduce interference with the reception of the information in the first band of radio frequencies.

2. A method as in claim 1, wherein if it is determined that the transmitter (24) is operating in the third band of radio frequencies, continuing to operate the transmitter in the third band of radio frequencies.

3. A method as in claim 1 or 2, where the transmitter (24) is a cellular mobile terminal transmitter, and where the request for a change is made by initiating a Classmark Change procedure with a cellular mobile terminal wireless network.

4. A method as in any of claims 1 to 3, where the first band of radio frequencies comprises 470-862MHz, where the second band of radio frequencies comprises 880-915MHz, and where the third band of radio frequencies lies above 1700MHz.

5. A method as in any of claims 1 to 3, where the first band of radio
frequencies comprises a DVB-T 470-862MHz reception band, where the second band of radio frequencies comprises a GSM 880-915MHz transmission band, and where the third band of radio frequencies comprises the GSM1800MHz band.

6. A method as in any of claims 1 to 3, where the first band of radio frequencies comprises a DVB-T 470-862MHz reception band, where the second band of radio frequencies comprises a GSM 880-915MHz transmission band, and where the third band of radio frequencies comprises the European 3G band.

7. A method as in any of claims 1 to 3, where the first band of radio frequencies comprises a 794-806MHz reception band, where the second band of radio frequencies comprises a cellular mobile terminal 824-849MHz transmission band, and where the third band of radio frequencies comprises the GSM 1900MHz band.

8. A method as in any of claims 1 to 3, wherein the first band of frequencies comprises one of: a band of about 1570-1580 MHz, a band of about 1222-1232 MHz and a band of about 1171-1181 MHz.

9. A method as in claim 8, wherein the second band of frequencies comprises one of: a band of about 824-849 MHz; a band of about 880-915 MHz; a band of about 1710-1785 MHz; and, a band of about 1850-1910 MHz.

10. A method as in claim 9, wherein the third band of frequencies does not match the second band of frequencies, and comprises one of: a band of about 824-849 MHz; a band of about 880-915 MHz; a band of about 1710-1785 MHz; and, a band of about 1850-1910 MHz.

11. A method as in claim 1 or 2, wherein the first band of radio frequencies carries a radio frequency distributed service, the second band of radio frequencies comprises a first GSM transmission frequency, and the third band of radio frequencies comprises a second GSM transmission frequency.

12. A method as in claim 11, wherein the radio frequency distributed service is one of DVB-T, DTV and GPS.

13. A method as in any of claims 1 to 3, where the first band of radio frequencies comprises a digital video broadcast frequency band, and where the second and third band of radio frequencies each comprises a cellular telephone frequency band.

14. A device (10) comprising:
a receiver (14, 16);
a transmitter (24);
means for generating a notification of reception by the receiver, the reception occurring in a first band of radio frequencies,
**characterised by**, responsive to the generated notification, means for determining whether the transmitter (24) is operating in a second band of radio frequencies or in a third band of radio frequencies; and
mean responsive to a determination by to the means for determining that the transmitter is operating in the second band of radio frequencies for requesting a change of transmitter transmission frequencies from the second band of radio frequencies to the third band of radio frequencies, the third band of frequencies being predetermined to reduce interference with the reception of the information in the first band of radio frequencies.

15. A device according to claim 14 comprising a first data processor (16, 26) for processing information received in the first band of radio frequencies and for generating the notification of reception by the receiver of information in the first band of radio frequencies, the first or a second data processor (16, 26) being configured to control transmission from said transmitter in a different band of radio frequencies, and wherein said means for determining and said means for requesting comprises said first data processor or said second data processor.

16. A device as in claim 14 or 15, wherein if it is determined that the transmitter (24) is operating in the third band of radio frequencies, the transmitter is arranged to continue to operate in the third band of radio frequencies.

17. A device as in claim 14 or 15, where the request for a change of transmitter transmission frequencies is made by initiating a Classmark Change procedure with a wireless network.

18. A device as in claim 17, where the transmitter (24) is a cellular mobile terminal transmitter, and where the wireless network comprises a cellular mobile terminal wireless network.

19. A device as in any of claims 14 to 18, where the first band of radio frequencies comprises 470-862MHz, and where the third band of radio frequencies lies above 1700MHz.

20. A device as in any of claims 14 to 18, where the first band of radio frequencies comprises a DVB-T 470-862MHz reception band, and where the transmitter requests a change from a GSM 880-915MHz transmission band to the third band of radio frequencies that comprises the GSM1800MHz band.

21. A device as in any of claims 14 to 18, where the first band of radio frequencies comprises a DVB-T 470-862MHz reception band, and where the transmitter requests a change from a GSM 880-915MHz transmission band to the third band of radio frequencies that comprises the European 3G band.

22. A device as in any of claims 14 to 18, where the first band of radio frequencies comprises a 794-806MHz reception band, where the second band of radio frequencies comprises a cellular mobile terminal 824-849MHz transmission band, and where the third band of radio frequencies comprises a GSM 1900MHz band.

23. A device as in any of claims 14 to 18, wherein the first band of frequencies comprises one of: a band of about 1570-1580 MHz, a band of about 1222-1232 MHz and a band of about 1171-1181 MHz.

24. A device as in claim 23, wherein the second band of frequencies comprises one of: a band of about 824-849 MHz; a band of about 880-915 MHz; a band of about 1710-1785 MHz; and, a band of about 1850-1910 MHz.

25. A device as in claim 24, wherein the third band of frequencies does not match the second band of frequencies, and comprises one of: a band of about 824-849 MHz; a band of about 880-915 MHz; a band of about 1710-1785 MHz; and, a band of about 1850-1910 MHz.

26. A device as in claim 14 or 15, wherein the first band of radio frequencies carries a radio frequency distributed service, the second band of radio frequencies comprises a first GSM transmission frequency, and the third band of radio frequencies comprises a second GSM transmission frequency.

27. A device as in claim 13 or 14, where the means for generating a notification of reception by the receiver is configured to generate the notification for an expected reception in the first band of radio frequencies.

28. A device comprising:
an input for communicating with a receiver;
an output for communicating with a transmitter;
at least one data processor (16, 26) configured to determine reception by said receiver in a first band of radio frequencies,
**characterised by** said at least one data processor (16, 26) being arranged to determine whether the transmitter is operating in a second band of radio frequencies or a third band of radio frequencies, and, in response to determining that the transmitter is operating in the second band of radio frequencies, to communicate a request to change transmitter transmission frequencies from the second band of radio frequencies to the third band of radio frequencies, the third band of radio frequencies being predetermined to reduce interference with the reception by the receiver in the first band of radio frequencies.

29. A device as in any one of claims 14, 15 or 28, where the first band of radio frequencies comprises a digital video broadcast frequency band, and where said second and third band of radio frequencies each comprises a cellular telephone frequency band.

30. A device as in claim 28, where said data processor (16, 26) is configured to determine reception by said receiver in said first band of radio frequencies for an expected reception in said first band of radio frequencies.

31. A device as in claim 28 or 30, where said receiver receives information in said first band of radio frequencies and said data processor is configured to process said information.

## Patentansprüche

1. Verfahren zum Betreiben eines Geräts (10) umfassend einen Empfänger (14, 16) und einen Sender (24), wobei das Verfahren umfasst Erzeugen einer Benachrichtigung des Empfangs mit dem Receiver, wobei der Empfang in einem ersten Funkfrequenzband stattfindet,
**gekennzeichnet durch** in Reaktion auf die erzeugte Benachrichtigung, Bestimmen, ob der Sender (24) in einem zweiten Funkfrequenzband oder in einem dritten Funkfrequenzband betrieben wird; und
wenn festgestellt wird, dass der Sender im zweiten Funkfrequenzband betrieben wird, Anfordern eines Wechsels der Sendeübertragungsfrequenzen vom zweiten Funkfrequenzband zum dritten Funkfrequenzband, wobei das dritte Funkfrequenzband vorbestimmt ist, Störungen beim Empfang der Informationen im ersten Funkfrequenzband zu reduzieren.

2. Verfahren gemäß Anspruch 1, wobei, wenn festgestellt wird, dass der Sender (24) im dritten Funkfrequenzband betrieben wird, Fortsetzen des Betriebs des Senders im dritten Funkfrequenzband.

3. Verfahren gemäß Anspruch 1 oder 2, wobei der Sender (24) ein Sender eines Zellularmobilendgerätes ist und wobei die Anforderung nach einem Wechsel durchgeführt wird durch Auslösen einer Classmark-Change-Prozedur mit einem drahtlosen Netzwerk des Zellularmobilendgeräts.

4. Verfahren gemäß einem der Ansprüche 1 bis 3, wobei das erste Funkfrequenzband 470-862 MHz umfasst, wobei das zweite Funkfrequenzband 880-915 MHz umfasst, und wobei das dritte Funkfrequenzband über 1700 MHz liegt.

5. Verfahren gemäß einem der Ansprüche 1 bis 3, wobei das erste Funkfrequenzband ein DVB-T 470-862 MHz Empfangsband umfasst, wobei das zweite Funkfrequenzband ein GSM 880-915 MHz Sendeband umfasst, und wobei das dritte Funkfrequenzband das GSM 1800 MHz Band umfasst.

6. Verfahren gemäß einem der Ansprüche 1 bis 3, wobei das erste Funkfrequenzband ein DVB-T 470-862 MHz Empfangsband umfasst, wobei das zweite Funkfrequenzband ein GSM 880-915 MHz Sendeband umfasst, und wobei das dritte Funkfrequenzband das europäische 3G Band umfasst.

7. Verfahren gemäß einem der Ansprüche 1 bis 3, wobei das erste Funkfrequenzband ein 794-806 MHz Empfangsband umfasst, wobei das zweite Funkfrequenzband ein 824-849 MHz Sendeband eines Zellularmobilendgeräts umfasst, und wobei das dritte Funkfrequenzband das GSM 1900 MHz Band umfasst.

8. Verfahren gemäß einem der Ansprüche 1 bis 3, wobei das erste Funkfrequenzband umfasst eines von: ein Band von ungefähr 1570-1580 MHz, ein Band von ungefähr 1222-1232 MHz und ein Band von ungefähr 1171-1181 MHz.

9. Verfahren gemäß Anspruch 8, wobei das zweite Funkfrequenzband umfasst eines von: ein Band von ungefähr 824-849 MHz; ein Band von ungefähr 880-915 MHz; ein Band von ungefähr 1710-1785 MHz; und ein Band von ungefähr 1850-1910 MHz.

10. Verfahren gemäß Anspruch 9, wobei das dritte Band von Frequenzen nicht mit dem zweiten Band von Frequenzen übereinstimmt und umfasst eines von: ein Band von ungefähr 824-849 MHz; ein Band von ungefähr 880-915 MHz; ein Band von ungefähr 1710-1785 MHz; und ein Band von ungefähr 1850-1910 MHz.

11. Verfahren gemäß Anspruch 1 oder 2, wobei das erste Funkfrequenzband einen über Funkfrequenzen verteilten Dienst trägt, das zweite Funkfrequenzband eine erste GSM Sendefrequenz umfasst und das dritte Funkfrequenzband eine zweite GSM Funkfrequenz umfasst.

12. Verfahren gemäß Anspruch 11, wobei der mittels Funkfrequenz verteilte Dienst eines ist von: DVB-T, DTV und GPS.

13. Verfahren gemäß einem der Ansprüche 1 bis 3, wobei das erste Funkfrequenzband ein digitales Videorundfunkfrequenzband umfasst und wobei das zweite und dritte Funkfrequenzband jedes ein Frequenzband eines Zellulartelefons umfasst.

14. Gerät (10) umfassend:
einen Empfänger (14,16);
einen Sender (24);
Mittel zum Erzeugen einer Benachrichtigung des Empfangs durch den Empfänger, wobei der Empfang in einem ersten Funkfrequenzband stattfindet,
**gekennzeichnet durch** auf die erzeugte Benachrichtigung reagierende Mittel zum Bestimmen, ob der Sender (24) in einem zweiten Funkfrequenzband oder in einem dritten Funkfrequenzband betrieben wird; und
Mittel, die auf eine Bestimmung **durch** die Mittel zum Bestimmen, dass der Sender im zweiten Funkfrequenzband betrieben wird, reagieren, zum Anfordern eines Wechsels der Sendersendefrequenzen vom zweiten Funkfrequenzband auf das dritte Funkfrequenzband, wobei das dritte Funkfrequenzband vorbestimmt ist, Störung beim Empfang der Informationen im ersten Funkfrequenzband zu reduzieren.

15. Gerät gemäß Anspruch 14, umfassend einen ersten Datenprozessor (16, 26) zum Verarbeiten von Informationen, die im ersten Funkfrequenzband empfangen wurden, und zum Erzeugen der Benachrichtigung des Empfangs durch den Empfänger von Informationen im ersten Funkfrequenzband, wobei der erste oder ein zweiter Datenprozessor (16, 26) konfiguriert ist, Übertragung vom Sender in einem anderen Funkfrequenzband zu steuern, und wobei die Mittel zum Bestimmen und die Mittel zum Anfordern den ersten Datenprozessor oder den zweiten Datenprozessor umfassen.

16. Gerät gemäß Anspruch 14 oder 15, wobei, wenn festgestellt wird, dass der Sender (24) im dritten Funkfrequenzband betrieben wird, der Sender eingerichtet ist, im dritten Funkfrequenzband weiter betrieben zu werden.

17. Gerät gemäß Anspruch 14 oder 15, wobei die Anforderung nach einem Wechsel der Senderübertragungsfrequenzen durchgeführt wird durch Auslösen einer Classmark-Change-Prozedur mit einem drahtlosen Netzwerk.

18. Gerät gemäß Anspruch 17, wobei der Sender (24) ein Sender eines Zellularmobilendgerätes ist und wobei das drahtlose Netzwerk ein drahtloses Netzwerk für Zellularmobilendgeräte umfasst.

19. Gerät gemäß einem der Ansprüche 14 bis 18, wobei das erste Funkfrequenzband 470-862 MHz umfasst, und wobei das dritte Funkfrequenzband über 1700 MHz liegt.

20. Gerät gemäß einem der Ansprüche 14 bis 18, wobei das erste Funkfrequenzband ein DVB-T 470-862 MHz Empfangsband umfasst, und wobei der Sender einen Wechsel von einem GSM 880-915 MHz Übertragungsband auf das dritte Funkfrequenzband, das das GSM 1800 MHz Band umfasst, anfordert.

21. Gerät gemäß einem der Ansprüche 14 bis 18, wobei das erste Funkfrequenzband ein DVB-T 470-862 MHz Empfangsband umfasst, und wobei der Sender einen Wechsel von einem GSM 880-915 MHz Übertragungsband auf das dritte Funkfrequenzband, das das europäische 3G Band umfasst, anfordert.

22. Gerät gemäß einem der Ansprüche 14 bis 18, wobei das erste Funkfrequenzband ein 794-806 MHz Empfangsband umfasst, wobei das zweite Funkfrequenzband ein 824-849 MHz Übertragungsband für zellulare Mobilendgeräte umfasst und wobei das dritte Funkfrequenzband ein GSM 1900 MHz Band umfasst.

23. Gerät gemäß einem der Ansprüche 14 bis 18, wobei das erste Funkfrequenzband umfasst eines von: ein Band von ungefähr 1570-1580 MHz; ein Band von ungefähr 1222-1232 MHz; und ein Band von ungefähr 1171-1181 MHz.

24. Gerät gemäß Anspruch 23, wobei das zweite Funkfrequenzband umfasst eines von: ein Band von ungefähr 824-849 MHz; ein Band von ungefähr 880-915 MHz; ein Band von ungefähr 1710-1785 MHz; und ein Band von ungefähr 1850-1910 MHz.

25. Gerät gemäß Anspruch 24, wobei das dritte Band von Frequenzen nicht mit dem zweiten Band von Frequenzen übereinstimmt und umfasst eines von: ein Band von ungefähr 824-849 MHz; ein Band von ungefähr 880-915 MHz; ein Band von ungefähr 1710-1785 MHz; und ein Band von ungefähr 1580-1910 MHz.

26. Gerät gemäß Anspruch 14 oder 15, wobei das erste Funkfrequenzband einen über Funkfrequenz verteilten Dienst trägt, das zweite Funkfrequenzband eine erste GSM-Übertragungsfrequenz umfasst und das dritte Funkfrequenzband eine zweite GSM-Übertragungsfrequenz umfasst.

27. Gerät gemäß Anspruch 13 oder 14, wobei die Mittel zum Erzeugen einer Benachrichtigung des Empfangs durch den Empfänger konfiguriert sind, die Benachrichtigung für einen erwarteten Empfang im ersten Funkfrequenzband zu erzeugen.

28. Gerät umfassend:
einen Eingang zum Kommunizieren mit einem Empfänger;
einen Ausgang zum Kommunizieren mit einem Sender;
wenigstens einen Datenprozessor (16, 26), der konfiguriert ist, Empfang durch den Empfänger in einem ersten Funkfrequenzband zu bestimmen,
**dadurch gekennzeichnet, dass** der wenigstens eine Datenprozessor (16, 26) eingerichtet ist, zu bestimmen, ob der Sender in einem zweiten Funkfrequenzband oder einem dritten Funkfrequenzband betrieben wird, und in Reaktion auf Bestimmen, dass der Sender im zweiten Funkfrequenzband betrieben wird, eine Anforderung zu kommunizieren, die Senderübertragungsfrequenzen vom zweiten Funkfrequenzband zum dritten Funkfrequenzband zu ändern, wobei das dritte Funkfrequenzband vorbestimmt ist, Störung mit dem Empfang durch den Empfänger im ersten Funkfrequenzband zu reduzieren.

29. Gerät gemäß einem der Ansprüche 14, 15 oder 28, wobei das erste Funkfrequenzband ein Funkfrequenzband für digitalen Videorundfunk umfasst und wobei das zweite und dritte Funkfrequenzband jedes ein Frequenzband eines Zellulartelefons umfasst.

30. Gerät gemäß Anspruch 28, wobei der Datenprozessor (16, 26) konfiguriert ist, Empfang durch den Empfänger im ersten Funkfrequenzband für einen erwarteten Empfang im ersten Funkfrequenzband zu bestimmen.

31. Gerät gemäß Anspruch 28 oder 30, wobei der Empfänger Informationen in einem ersten Funkfrequenzband empfängt und der Datenprozessor konfiguriert ist, die Informationen zu verarbeiten.

## Revendications

1. Procédé d'exploitation d'un dispositif (10) comportant un récepteur (14, 16) et un émetteur (24), le procédé comportant l'étape consistant à générer une notification de réception au moyen du récepteur, la réception étant occasionnée dans une première bande de fréquences radio,
**caractérisé par** l'étape consistant à, en réponse à la notification générée, déterminer si l'émetteur (24) est exploité dans une deuxième bande de fréquences radio ou dans une troisième bande de fréquences radio ; et
s'il est déterminé que l'émetteur est exploité dans la deuxième bande de fréquences radio, demander un changement de fréquences de transmission d'émetteur de la deuxième bande de fréquences radio à la troisième bande de fréquences radio, la troisième bande de fréquences étant prédéterminée pour réduire des interférences avec la réception des informations dans la première bande de fréquences radio.

2. Procédé selon la revendication 1, dans lequel, s'il est déterminé que l'émetteur (24) est exploité dans la troisième bande de fréquences radio, continuer à exploiter l'émetteur dans la troisième bande de fréquences radio.

3. Procédé selon la revendication 1 ou 2, dans lequel l'émetteur (24) est un émetteur de terminal mobile cellulaire, et dans lequel la demande de changement est faite en initiant une procédure de changement de classe auprès d'un réseau sans fil de terminal mobile cellulaire.

4. Procédé selon l'un quelconque des revendications 1 à 3, dans lequel la première bande de fréquences radio est incluse dans la bande 470 - 862 MHz, dans lequel la deuxième bande de fréquences radio est incluse dans la bande 880 - 915MHz, et dans lequel la troisième bande de fréquences radio est supérieure à 1 700 MHz.

5. Procédé selon l'une quelconque des revendications 1 à 3, dans lequel la première bande de fréquences radio comporte une bande de réception de 470 - 862 MHz de système de diffusion vidéo numérique terrestre (DVB-T), dans lequel la deuxième bande de fréquences radio comporte une bande de transmission de 880 - 915 MHz de système mondial de communication avec les mobiles (GSM), et dans lequel la troisième bande de fréquences radio inclut la bande de 1 800 MHz de système mondial de communication avec les mobiles (GSM).

6. Procédé selon l'une quelconque des revendications 1 à 3, dans lequel la première bande de fréquences radio comporte une bande de réception de 470 - 862 MHz de système de diffusion vidéo numérique terrestre (DVB-T), dans lequel la deuxième bande de fréquences radio comporte une bande de transmission de 880 - 915 MHz de système mondial de communication avec les mobiles (GSM), et dans lequel la troisième bande de fréquences radio inclut la bande 3G européenne.

7. Procédé selon l'une quelconque des revendications 1 à 3, dans lequel la première bande de fréquences radio comporte une bande de réception de 794 - 806 MHz, dans lequel la deuxième bande de fréquences radio comporte une bande de transmission de 824 - 849 MHz de terminal mobile cellulaire, et dans lequel la troisième bande de fréquences radio comporte la bande de 1 900 MHz de système mondial de communication avec les mobiles (GSM).

8. Procédé selon l'une quelconque des revendications 1 à 3, dans lequel la première bande de fréquences comporte l'une parmi : une bande d'environ 1 570 - 1 580 MHz, une bande d'environ 1 222 - 1 232 MHz et une bande d'environ 1 171 - 1 181 MHz.

9. Procédé selon la revendication 8, dans lequel la deuxième bande de fréquences comporte l'une parmi : une bande d'environ 824 - 849 MHz ; une bande d'environ 880 - 915 MHz ; une bande d'environ 1 710 - 1 785 MHz ; et une bande d'environ 1 850 - 1 910 MHz.

10. Procédé selon la revendication 9, dans lequel la troisième bande de fréquences ne correspond pas à la deuxième bande de fréquences, et comporte l'une parmi : une bande d'environ 824 - 849 MHz ; une bande d'environ 880 - 915 MHz ; une bande d'environ 1 710 - 1 785 MHz ; et une bande d'environ 1 850 - 1 910 MHz.

11. Procédé selon l'une quelconque des revendications 1 ou 2, dans lequel la première bande de fréquences radio transporte un service à fréquences radio distribuées, la deuxième bande de fréquences radio comporte une première fréquence de transmission de système mondial de communication avec les mobiles (GSM), et la troisième bande de fréquences radio comporte une seconde fréquence de transmission de système mondial de communication avec les mobiles (GSM).

12. Procédé selon la revendication 11, dans lequel le service à fréquences radio distribuées est l'un parmi un service de diffusion vidéo numérique terrestre (DVB-T), un service de télévision numérique (DTV) et un service de système de positionnement mondial (GPS).

13. Procédé selon l'une quelconque des revendications 1 à 3, dans lequel la première bande de fréquences radio comporte une bande de fréquence de diffusion vidéo numérique, et dans lequel la deuxième et la troisième bande de fréquences radio comportent chacune une bande de fréquence de téléphone cellulaire.

14. Dispositif (10) comportant :
un récepteur (14, 16) ;
un émetteur (24) ;
un moyen pour générer une notification de réception par le récepteur, la réception étant occasionnée dans une première bande de fréquences radio,
**caractérisé par**, en réponse à la notification générée, un moyen pour déterminer si l'émetteur (24) est exploité dans une deuxième bande de fréquences radio ou dans une troisième bande de fréquences radio ; et
un moyen, en réponse à une détermination par le moyen destiné à déterminer que l'émetteur est exploité dans la deuxième bande de fréquences radio, pour demander un changement de fréquences de transmission d'émetteur de la deuxième bande de fréquences radio à la troisième bande de fréquences radio, la troisième bande de fréquences étant prédéterminée pour réduire des interférences avec la réception des informations dans la première bande de fréquences radio.

15. Dispositif selon la revendication 14 comportant un premier processeur de données (16, 26) pour traiter des informations reçues dans la première bande de fréquences radio et pour générer la notification de réception par le récepteur d'informations dans la première bande de fréquences radio, le premier ou un second processeur de traitement de données (16, 26) étant configuré pour commander une transmission à partir dudit émetteur dans une différente bande de fréquences radio, et dans lequel ledit moyen pour déterminer et ledit moyen pour demander comportent ledit premier processeur de données ou ledit second processeur de données.

16. Dispositif selon la revendication 14 ou 15, dans lequel s'il est déterminé que l'émetteur (24) est exploité dans la troisième bande de fréquences radio, l'émetteur est agencé pour continuer à être exploité dans la troisième bande de fréquences radio.

17. Dispositif selon la revendication 14 ou 15, dans lequel la demande de changement de fréquences de transmission d'émetteur est faite en initiant une procédure de changement de classe auprès d'un réseau sans fil.

18. Dispositif selon la revendication 17, dans lequel l'émetteur (24) est un émetteur de terminal mobile cellulaire, et dans lequel le réseau sans fil comporte un réseau sans fil de terminal mobile cellulaire.

19. Dispositif selon l'une quelconque des revendications 14 à 18, dans lequel la première bande de fréquences radio est incluse dans la bande 470 - 862 MHz, et dans lequel la troisième bande de fréquences radio se situe au-dessus de la bande de 1 700 MHz.

20. Dispositif selon l'une quelconque des revendications 14 à 18, dans lequel la première bande de fréquences radio comporte une bande de réception de 470 - 862 MHz de système de diffusion vidéo numérique terrestre (DVB-T), et dans lequel l'émetteur demande un changement d'une bande de transmission de 880 - 915 MHz de système mondial de communication avec les mobiles (GSM) à la troisième bande de fréquences radio qui comporte la bande de 1 800 MHz de système mondial de communication avec les mobiles (GSM).

21. Dispositif selon l'une quelconque des revendications 14 à 18, dans lequel la première bande de fréquences radio comporte une bande de réception de 470 - 862 MHz de système de diffusion vidéo numérique terrestre (DVB-T), et dans lequel l'émetteur demande un changement d'une bande de transmission de 880 - 915 MHz de système mondial de communication avec les mobiles (GSM) à la troisième bande de fréquences radio qui comporte la bande 3G européenne.

22. Dispositif selon l'une quelconque des revendications 14 à 18, dans lequel la première bande de fréquences radio comporte une bande de réception de 794 - 806 MHz, dans lequel la deuxième bande de fréquences radio comporte une bande de transmission de 824 - 849 MHz de terminal mobile cellulaire, et dans lequel la troisième bande de fréquences radio comporte une bande de 1 900 MHz de système mondial de communication avec les mobiles (GSM).

23. Dispositif selon l'une quelconque des revendications 14 à 18, dans lequel la première bande de fréquences comporte l'une parmi : une bande d'environ 1 570 - 1 580 MHz, une bande d'environ 1 222 - 1 232 MHz et une bande d'environ 1 171 - 1 181 MHz.

24. Dispositif selon la revendication 23, dans lequel la deuxième bande de fréquences comporte l'une parmi : une bande d'environ 824 - 849 MHz ; une bande d'environ 880 - 915 MHz ; une bande d'environ 1 710 - 1 785 MHz ; et une bande d'environ 1 850 - 1 910 MHz.

25. Dispositif selon la revendication 24, dans lequel la troisième bande de fréquences ne correspond pas à la deuxième bande de fréquences, et comporte l'une parmi : une bande d'environ 824 - 849 MHz ; une bande d'environ 880 - 915 MHz ; une bande d'environ 1 710 - 1 785 MHz ; et, une bande d'environ 1 850 - 1 910 MHz.

26. Dispositif selon la revendication 14 ou 15, dans lequel la première bande de fréquences radio transporte un service à fréquences radio distribuées, la deuxième bande de fréquences radio comporte une première fréquence de transmission de système mondial de communication avec les mobiles (GSM), et la troisième bande de fréquences radio comporte une seconde fréquence de transmission de système mondial de communication avec les mobiles (GSM).

27. Dispositif selon la revendication 13 ou 14, dans lequel le moyen pour générer une notification de réception par le récepteur est configuré pour générer la notification pour une réception prédite dans la première bande de fréquences radio.

28. Dispositif comportant :
une entrée pour communiquer avec un récepteur ;
une sortie pour communiquer avec un émetteur ;
au moins un processeur de données (16, 26) configuré pour déterminer la réception par ledit récepteur dans une première bande de fréquences radio,
**caractérisé en ce que** ledit au moins un processeur de données (16, 26) est agencé pour déterminer si l'émetteur est exécuté dans une deuxième bande de fréquences radio ou une troisième bande de fréquences radio, et, en réponse à la détermination que l'émetteur est exécuté dans la deuxième bande de fréquences radio, pour communiquer une demande de changement de fréquences de transmission d'émetteur de la deuxième bande de fréquences radio à la troisième bande de fréquences radio, la troisième bande de fréquences radio étant prédéterminée pour réduire une interférence avec la réception par le récepteur dans la première bande de fréquences radio.

29. Dispositif selon l'une quelconque des revendications 14, 15 ou 28, dans lequel la première bande de fréquences radio comporte une bande de fréquence de diffusion vidéo numérique, et dans lequel ladite deuxième et ladite troisième bande de fréquences radio comportent chacune une bande de fréquence de téléphone cellulaire.

30. Dispositif selon la revendication 28, dans lequel ledit processeur de données (16, 26) est configuré pour déterminer la réception par ledit récepteur dans ladite première bande de fréquences radio pour une réception prédite dans ladite première bande de fréquences radio.

31. Dispositif selon la revendication 28 ou 30, dans lequel ledit récepteur reçoit des informations dans ladite première bande de fréquences radio et dans lequel ledit processeur de données est configuré pour le traitement desdites informations.
